# EUROPEAN PATENT SPECIFICATION

(11) **EP 2 758 147 B1**
(45) Date of publication and mention of the grant of the patent: **04.11.2020**
(21) Application number: 12762475.7
(22) Date of filing: 04.09.2012
(51) Int. Cl.: B01D 29/39

(54) **FILTRATION ELEMENT AND ASSEMBLY FOR BIOPROCESS APPLICATIONS**
FILTERELEMENT UND ANORDNUNG FÜR BIOPROCESSING-ANWENDUNGEN
ÉLÉMENT ET ENSEMBLE FILTRATION POUR APPLICATIONS DE BIOPROCÉDÉS

(30) Priority: 19.09.2011 US 201161536363 P
(43) Date of publication of application: 30.07.2014
(73) Proprietor: 3M Innovative Properties Company, St. Paul, MN 55133-3427 (US)
(72) Inventor: BRYAN, Deborah M., Saint Paul, Minnesota 55133-3427 (US); BLAZE, Martin J., Saint Paul, Minnesota 55133-3427 (US); KURUC, Gokhan, Saint Paul, Minnesota 55133-3427 (US)
(74) Representative: Vossius & Partner Patentanwälte Rechtsanwälte mbB
(86) International application number: PCT/US2012/053639
(87) International publication number: WO 2013/043362

(56) References cited:
- WO-A1-02/070102
- WO-A2-2010/053903
- GB-A- 1 544 475
- US-A- 1 989 795
- US-A- 2 592 849
- US-A- 2 643 772
- US-A- 4 501 663

## Description

### FIELD

The present disclosure generally relates to the field of fluid filter elements or cells and fluid filter assemblies or capsules for purifying fluids from bioprocess applications and processes for using the same.

### BACKGROUND

Products of bioprocesses, specifically biopharmaceuticals, are valuable. During research and development of such products, careful consideration and attention during all aspects of preparation are given to minimize waste and maximize yield of these products. As such, with specific reference to a filtering step, filtration assemblies used for such processes should strive to minimize waste.

It is well-recognized that the pressure drop of a filter increases through collection of residue on the filter. Because of this, filters typically have pressure ratings to accommodate a caked-up or plugged filter and a subsequent blow-down of the filter to recover filtrate or filtered material. By their geometries, a spherical or an elliptical dome-shaped design for a filter provides high pressure ratings. Such designs, however, result in higher than desirable upstream and residual volumes of valuable products of bioprocesses.

In reducing internal volume of filtration devices to help reduce upstream and residual volumes, there is a trade-off on pressure rating. To accommodate this, sometimes external equipment is associated with filtration devices to improve pressure rating. During research and development of bioprocesses, often laboratory and/or pilot scale operations are undertaken under conditions of limited space and storage. As a result, additional external equipment is not desired.

There is a continuing need to provide filtration devices that reduce and/or minimize upstream and residual volumes while providing an adequate pressure rating without requiring too much space.

WO 2010/053903 A2, WO 02/070102 A1, and US 4501663 disclose exemplar filtration systems.

### SUMMARY

The invention for which protection is sought is defined by the independent claim, the dependent claims concerning the preferred embodiments.

Provided are fluid filter elements or cells and fluid filter assemblies or capsules for purifying fluids from bioprocess applications and processes for using the same. More particularly, the fluid filter elements or cells and fluid filter assemblies or capsules minimize upstream and residual volumes and also ensure a pressure rating to permit the assemblies or capsules without the use of external equipment.

In a first aspect, a filtration capsule comprises: a first and second shells that are sealably attached to each other, wherein both shells comprises a curved exterior surface and a substantially flat interior wall that is integral to the shell; an inlet and an outlet; and one or more filter elements contained in the filtration capsule, each filter element comprising an outer surface in fluid communication with the inlet and an inner surface in fluid communication with the outlet.

The filtration capsule further comprises a ribbing structure on one or both of the curved exterior surfaces of the shells. The ribbing structure is integral to the one or both shells. Moreover, the ribbing structure can be effective to impart a pressure rating such that the filtration capsule is stand alone. The ribbing structure comprises one or a plurality of peripheral support rings, one or a plurality of axial lengths on one or both of the shells.

The substantially flat interior walls of the first shell, the second shell, or both can independently comprise one or more protrusions.

One embodiment provides that the filtration capsule is a single use device.

Another embodiment provides that one or both of the shells are formed from a translucent or transparent material. Both of the shells can be formed from a material that comprises a tensile strength at yield of 68.95 N/mm² (10,000 psi) or greater and exhibits chemical resistance, weldability, and sterilizability. In a specific embodiment, the material comprises polysulfone.

In one embodiment, the inlet and the outlet are both integral to the second shell. A detailed embodiment provides that the inlet and the outlet are substantially horizontal.

The filtration capsule can comprise at least two legs. One embodiment provides that there are three legs spaced approximately 120° apart on the curved exterior surface of the second shell.

With respect to size, the first shell can have substantially the same capacity as the second shell. On the other hand, the first shell can have a capacity that is 1.1 to 10 or more times the capacity of the second shell.

As to the filter element, it can comprise one or more media layers. Another embodiment provides that the filter element further comprises a flow inhibitor.

In an embodiment, the filtration capsule further comprises an o-ring seal between the capsule and the filter element, specifically between a protrusion of the second shell of the capsule and an inner overmold of the filter element.

Another aspect provides a filtration assembly that comprises a plurality of filtration capsules according embodiments provided herein. The plurality of filtration capsules can be assembled in parallel. On the other hand, the plurality of filtration capsules can be assembled in series. In one or more embodiments, a footprint of the assembly is independent of the number of filtration capsules.

The filtration capsule can be used in methods of filtering comprising: introducing an incoming fluid into the filtration capsule according to embodiments provided herein and collecting a filtered fluid from the outlet.

A method of making the above mentioned filter assemby may comprise: providing the filtration capsule according to embodiments provided herein such that an upstream volume is minimized as compared to a comparative filtration capsule of constant capacity that does not have a substantially flat interior wall that is integral to the first or second shell. The method further comprises providing a ribbing structure integral to the filtration capsule such that the filtration capsule is stand alone. The method further comprises providing the inlet and the outlet in a substantially horizontal configuration. The method may further comprise forming one or both of the shells from a translucent or transparent material such that a fluid in the filtration capsule can be monitored, or stacking a plurality of filtration capsules to form an assembly wherein a footprint of the assembly is independent of the number of filtration capsules. An o-ring seal between a protrusion of the second shell and an inner overmold of the filter element may be present. The method can further comprise installing a flow inhibitor on the filter element. The method can also include where the second shell is configured to receive the first shell independent of the capacity of the first shell.

These and various other features and advantages will be apparent from a reading of the following detailed description.

### BRIEF DESCRIPTION OF THE DRAWINGS

The disclosure may be more completely understood in consideration of the following detailed description in connection with the accompanying drawings, in which:
FIG. 1 is a cross-sectional side view of a filtration capsule according to an embodiment;
FIG. 2 is a cross-sectional side view of a filter element in a filtration capsule according to an embodiment;
FIG. 3 is a cross-sectional side view of a filtration capsule according to an embodiment;
FIG. 4 is a schematic of a filter capsule according to an embodiment;
FIGS. 5A and 5B are schematics of a filter assembly according to other embodiments;
FIG. 6 is a schematic of a filter assembly according to an embodiment;
FIG. 7 is a top view of a schematic of a filter capsule according to an embodiment; and
FIG. 8 is a bottom view of a schematic of a filter capsule according to an embodiment.

The figures are not necessarily to scale. Like numbers used in the figures refer to like components. It will be understood, however, that the use of a number to refer to a component in a given figure is not intended to limit the component in another figure labeled with the same number.

### DETAILED DESCRIPTION

Provided are fluid filter elements or cells and fluid filter assemblies or capsules for purifying fluids from bioprocess applications and processes for using the same. More particularly, the fluid filter elements or cells and fluid filter assemblies or capsules minimize upstream and residual volumes and also ensure a pressure rating to permit the assemblies or capsules without the use of external equipment. Such capsules and assemblies can be disposable. The cells and capsules are in particular suitable for intermediate filtration volumes (150-2500 cm² effective filtration area (EFA)) of biopharmaceutical processes. One or more of the following features are also provided by these cells and capsules: ergonomic connections, stand alone device with desired pressure rating, offer a small footprint when running in series or parallel, ability to monitor fluid level during operation, provide various EFA sizes to allow for use with minimal fluid volumes, and offer an integral seal between clean and dirty process fluid streams.

In particular, fluids/products of bioprocesses tend to be expensive and to be generated in limited quantities. Such fluids almost always require filtration. There is a particular need to minimize volumes of fluids of bioprocesses that become unusable due to hold up in filtration devices. One or more embodiments minimize the amount of fluid needed to fill the filtration capsules or device (upstream volume) and reduce amount of unfiltered material left after filtration (residual volume). One or more embodiments have eliminated a spherical design and, while keeping a curved exterior surface introduced a substantially flat interior surface. Reference to "curved" means that the exterior walls are shaped to extend in an arc. Reference to "substantially flat" means that the walls are shaped to minimize upstream volume while providing acceptable shape and structure to accommodate external features (such as ribbing) and internal features (such as filtration elements).

One or more embodiments ensure that a desired pressure rating is achieved in a stand alone structure that meets minimizing upstream and residual volumes and accounts for a need to affix the shells together by, for example, vibration welding. Reference to "stand alone" means the ability of the filtration capsule to withstand pressures greater than atmospheric that are needed to accommodate a plugged filter and/or blowing down the filter without the need for an external device to anchor and/or surround and/or hold the vessel According to the invention is provided a ribbing structure to provide structural support.

One or more embodiments of the filtration assemblies maintain a small footprint no matter whether individual capsules are connected in series or in parallel with no restriction on fluid level in capsule. Capsules can be stacked as needed. Configuration (number and spacing) of legs on the capsule facilitates placement of any capsule in virtually any orientation with respect to the other capsules.

One or more embodiments of the capsules provide ergonomic connections, meaning the inlets and outlets are easy to assemble with gauges, pipes, tubing, and the like that provide incoming fluid and that route filtered fluid to another capsule or to a holding tank or to a packaging location or to other destinations. According to the invention, ergonomic connections are achieved is by providing an inlet and an outlet that are both "substantially horizontal," in that the inlet and the outlet are generally parallel to the interior substantially flat walls.

Suitable materials for the shell include materials having desired properties of one or more of the following mechanical strength, chemical resistance, weldability, material safety, and sterilization. Reference to "mechanical strength" means that the filter provides adequate structure to withstand at least a desired pressure rating and assembly of multiple capsules stacked on top of each other. Reference to "chemical resistance" means that the material does not degrade in the presence of chemicals in the incoming fluid including, but not limited to, one or more of the following: bases, alcohols, alkali. By "weldability," it is meant that the material will sealably adhere to itself and minimizes off-gassing and fuming upon welding by methods including, but not limited to, hot plate welding and ultrasonic bonding. With respect to "material safety," it is expected that suitable materials will have extraction profiles suitable for pharmaceutical contact. In terms of "sterilization," a suitable material should be able to be sterilized without negative impact on the material by methods including, but not limited to, autoclave sterilization.

In the following description, reference is made to the accompanying drawings that form a part hereof, and in which are shown by way of illustration several specific embodiments. It is to be understood that other embodiments are contemplated and may be made without departing from the scope of the claims.

All scientific and technical terms used herein have meanings commonly used in the art unless otherwise specified. The definitions provided herein are to facilitate understanding of certain terms used frequently herein.

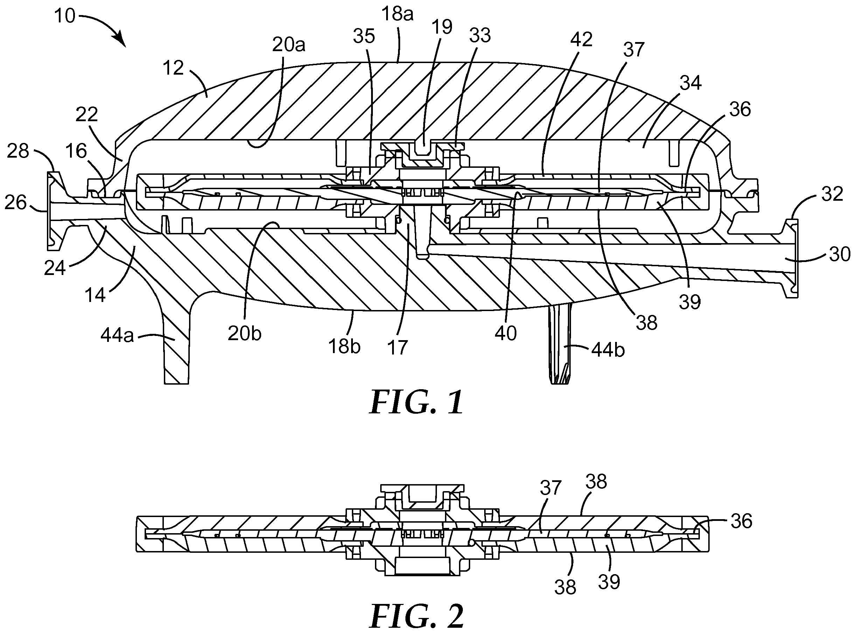

Turning to the figures, FIG. 1 shows a filtration capsule 10 having a first or top shell 12 and a second or bottom shell 14 that are sealably attached to each other via a vibration weld 16. The shells each have exterior surfaces 18a and 18b that can be curved or domed or otherwise shaped to a desired configuration. The shells also each have substantially flat interior walls 20a and 20b that are integral to the shells 12 and 14, respectively. The presence of protrusions, such as 17 and/or 19, on the substantially flat interior walls 20a and 20b does not preclude these interior walls from being substantially flat. That is, there is no air-filled gap in the space between the flat interior walls and the curved exterior surface. When the two shells 12 and 14 are attached to each other, the area defined by the substantially flat interior walls 20a, 20b and sides 22, 24 is the capacity, which refers to the theoretical maximum volume of fluid that can be retained by a shell individually or the capsule as a whole in the absence of internal features. Because of the presence of a filter element 36 and structures on the interior walls themselves, capacity is usually higher than what is referred to as the upstream volume, which is the amount of fluid required to fill the capsule. Hold-up or residual volume is that amount of fluid that remains (e.g., is held up) in the capsule after action to blow out the capsule upon reaching a certain endpoint such as plugging or a targeted pressure drop.

The second or bottom shell 14 also comprises an inlet 26 which can have a flange 28, and an outlet 30 that can also have a flange 32. For ease of construction, it is preferred that the inlet 26 and the outlet 30 are integral to the second or bottom shell 14. It is recognized, however, that the location of the inlet or the outlet or both can be moved to the first or top shell should such a need arise. The inlet 26 and outlet 30 are defined by respective passages through the shell structure and are substantially horizontal. In use, attached to the flange 28 is a gauge, pipe, tubing, or the like that supplies an incoming fluid that contains particles or other contaminants to be removed by the filtration capsule 10. The fluid then enters the upstream volume 34 and contacts an outer surface 38 of a filter element 36. In one or more embodiments, the filter element 36 is lenticular. The outer surface 38 provides entry to the filter element, passing through a media pack 39 whose filtration media removes the particles and other contaminants from the incoming fluid. Filtration media can be a single layer or multiple layers. Examples of suitable filtration media may include cellulosic media, synthetic media, or a combination thereof. Media may be a non-woven material, and in some embodiments, may be charge modified, e.g., electrostatically treated. Media may have fine fibers or nanofibers present dispersed throughout media or present as a layer thereon. One exemplary material for media is cellulosic depth media, optionally containing filter aid such as diatomaceous earth or perlite. Examples of such media include Zeta Plus™ filtration media made by CUNO 3M.

After flowing through the media pack, the fluid is then considered to be a filtered fluid which exits the media pack from an inner surface 40 that is in fluid communication with the outlet 30. A separator 37 can be used to direct flow. In a specific embodiment, the separator 37 has passages that direct the flow from the inner surface 40 to the outlet 30. The filtration element 36 has an inner overmold 35 that separates the filtered fluid from the incoming fluid. The inner overmold 35 in conjunction with an endcap 33 to prevent bypass of the incoming fluid to the outlet 30. As desired, surface area available for filtration can be varied by the use of a flow inhibitor 42, which covers and/or sealably affixes to the separator 37 or to all or some portion of the media pack 39 to prevent fluid from entering the media pack 39. FIG. 2 shows a filter element 36 in the absence of a flow inhibitor where no portion of the outer surface 38 of the media pack 39 is inhibited from contacting incoming fluid.

The substantially horizontal configuration of the inlet 26 and outlet 30 allows users to make easy, ergonomic connections of tubing and equipment without the need to use peripheral equipment. A user can position the filtration capsule on a work surface such as a table or laboratory bench and have easy accessibility to the connections. Integration of the inlet 26 and outlet 30 into the shell components 12 and/or 14 results in a clean, finished appearance while not requiring additional manufacturing steps in making the shells. Shells can be manufactured in ways understood by those skilled in the art, including plastic injection molding or steel or plastic machining. Suitable materials for the shell include materials having desired properties of one or more of the following mechanical strength, chemical resistance, weldability, material safety, and sterilization. In addition, one or both of the shells can be formed from a translucent or transparent material. One suitable material is polysulfone (PS). The second or bottom shell 14 has at least two legs 44a and 44b. In an embodiment having 2 legs, they can be spaced about 180° apart. Another detailed embodiment provides that there are 3 legs, which are spaced about 120° apart. Yet another embodiment provides that there are 4 legs, which are spaced about 90° apart.

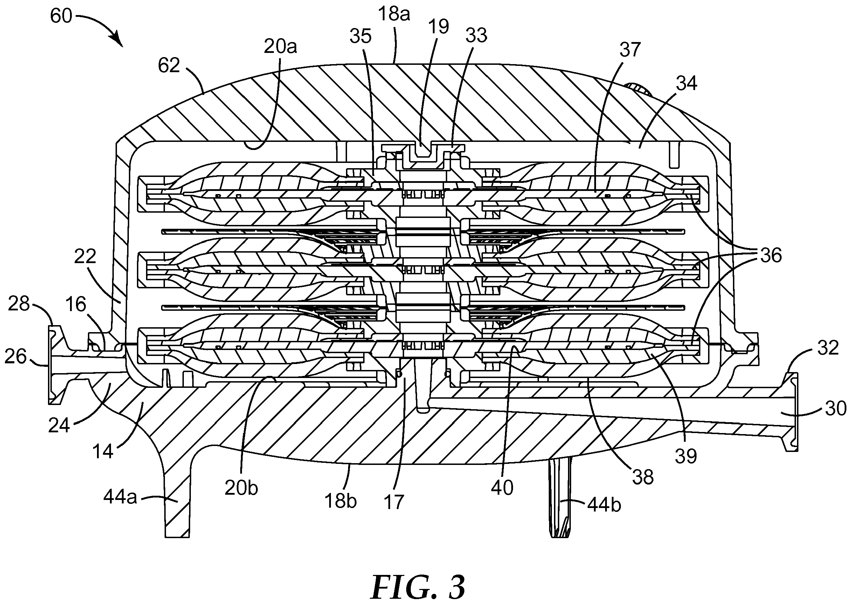

FIG. 3 shows an embodiment where the first or top shell 62 of the filtration capsule 60 has a capacity of about 4.5 times that of the second or bottom shell 14. In this embodiment, three separate filtration elements 36 are provided, providing three times the effective filtration surface area (EFA) as compared with an embodiment having one filtration element such as shown in FIG. 2. The EFA of FIG. 2 is twice that of FIG. 1, which has the flow inhibitor 42.

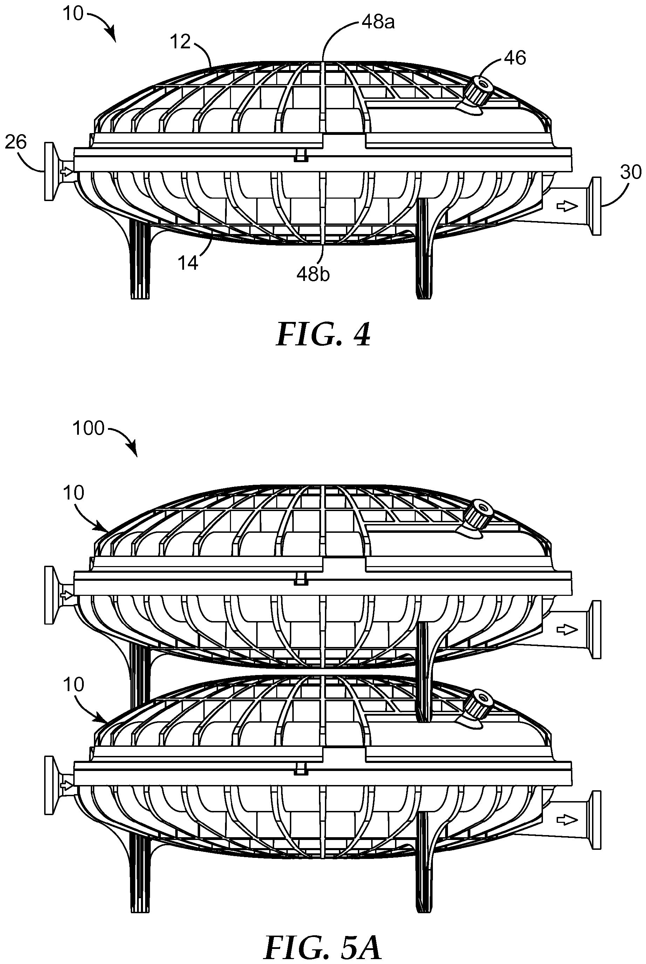

FIG. 4 shows a schematic of a filtration capsule 10 having the first or top shell 12 sealably attached to the second or bottom shell 14 where ribbing structures 48a, 48b are integral to each shell, respectively, to provide effective mechanical integrity to impart a pressure rating such that the filtration capsule is stand alone. The ribbing structures 48a, 48b are formed integrally with the shells during plastic injection molding. The first or top shell 12 can have a vent 46 to relieve pressure. Should it be desired, the second or bottom shell can have the vent.

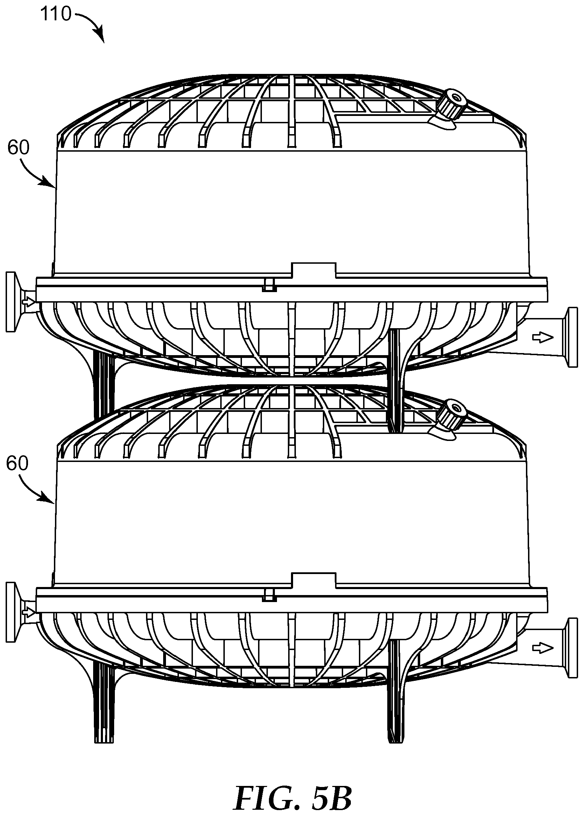

As shown in FIGS. 5A and 5B, filtration assemblies 100, 110 can be made using a plurality of filtration capsules 10, 60, respectively. The filtration capsules can be connected in parallel or in series as desired. The legs fit among the ribbing structure so that multiple capsules can be stacked without changing the footprint of the entire assembly. As needed, footing of the legs and/or the curved exterior surface of the first or top shell can be configured to releasably mate together to provide added stability.

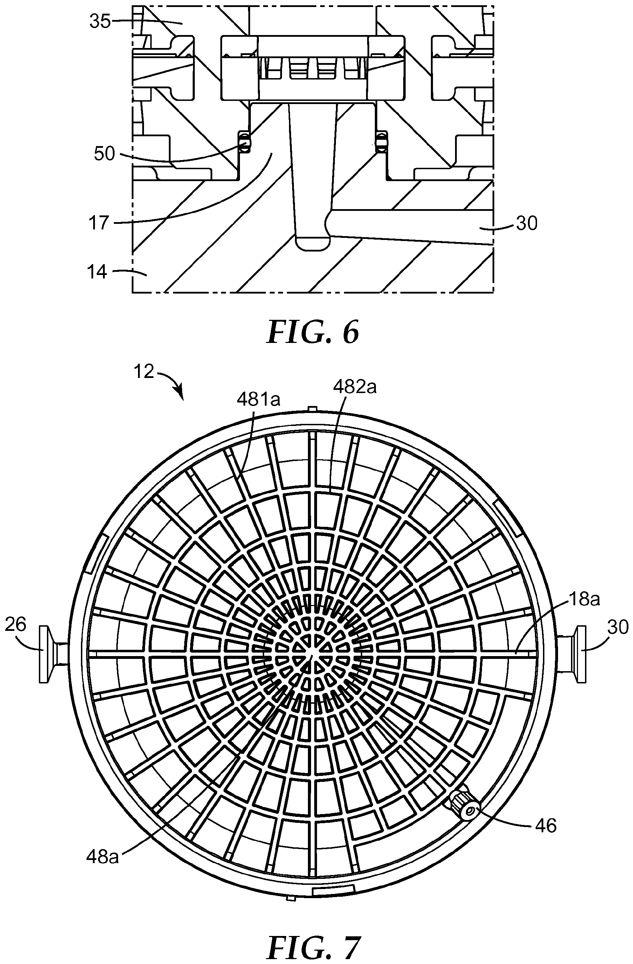

FIG. 6 provides a schematic of the detail related to the sealing of the inner overmold 35 of the filter element to the protrusion 17 of the second or bottom shell 14 by the use of an o-ring seal 50. The protrusion 17 is of sufficient length to provide bearing surfaces for the sealing action and/or stability to support of the filter element. Usually, the inner overmold 35 is formed from a thermoplastic elastomer (TPR) in order to facilitate integral construction with internal parts (e.g., a separator) of the filter element itself that are usually formed from polypropylene so no fluid bypass within the filter element occurs. The inner overmold is molded over the polypropylene components, so the melting point of the inner overmold needs to be lower than that of polypropylene to avoid melting of the polypropylene base components during the overmolding process.

Polysulfone is desirable for the construction of the shell because it has desired structural properties and it is translucent. TPR and polysulfone do not bond, however, due to the difference in material properties. It was unexpectedly found that the use of an o-ring provides a superior seal as compared to the use of an adhesive between the two components or a mechanical joining method. Traditionally, the use of an o-ring to seal against TPR, an elastomeric material, has been discouraged due to the inherent nature of the TPR to act elastically. A high durometer TPR can be used in a specific embodiment to overcome this challenge. Moreover, the TPR is circumferential and thus gains support via hoop strength. The o-ring as chosen provides decreased risk of bypass, low upstream volume, low risk of breaching seal integrity during shipping and shell flex during pressurization, and low design molding complexity. The choice of an o-ring seal results in simplicity in the mold design due to elimination of need for secondary manufacturing steps or highly complex tooling due to undercuts.

FIG. 7 provides a top view of first or top shell 12 having a ribbing structure 48a, a curved exterior surface 18a, and a vent 46. The ribbing structure 48a comprises one or both of one or a plurality of peripheral support rings 482a and one or a plurality of axial lengths 481a. As needed the thickness of the rings 482a and lengths 481a can increase towards the center of the shell where deflection tends to be largest. As desired, the rings can have spacings that are equidistant or that are closer together towards the inner diameter of the shell and farther apart towards the outer diameter. The lengths can have spacings that are equidistant or that are unevenly spaced. The lengths can meet in the middle of the shell, or not.

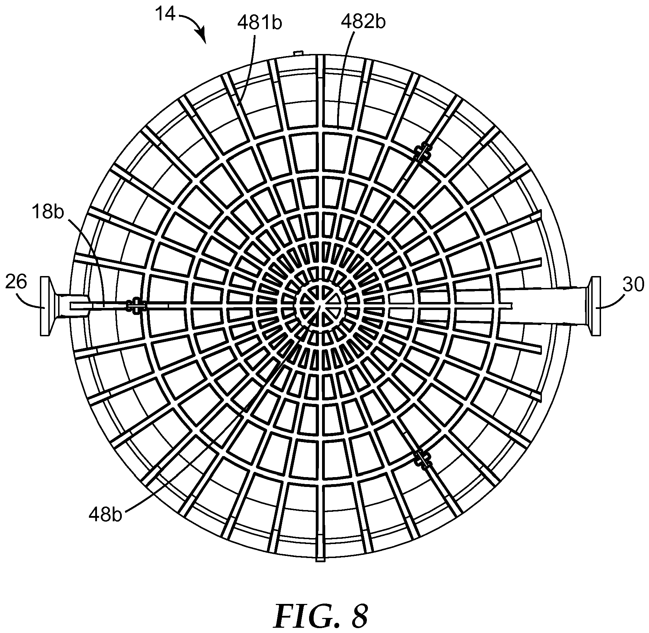

FIG. 8 provides a bottom view of second or bottom shell 14 having a ribbing structure 48b, a curved exterior surface 18b, an inlet 26, and an outlet 30. The ribbing structure 48b comprises one or both of one or a plurality of peripheral support rings 482b and one or a plurality of axial lengths 481b. As needed the thickness of the rings 482b and lengths 481b can increase towards the center of the shell where deflection tends to be largest. As desired, the rings can have spacings that are equidistant or that are closer together towards the inner diameter of the shell and farther apart towards the outer diameter. The lengths can have spacings that are equidistant or that are unevenly spaced. The lengths can meet in the middle of the shell, or not.

### EXAMPLES

### EXAMPLE 1

Various materials for the shell were tested with respect to mechanical strength, chemical resistance, material safety, weldability, and sterilization. Visual observation of opacity was also done. Table 1 provides a summary of a suitable material and a comparative material.

**Table 1**

| | **Example 1-A** | **Example 1-B Comparative** |
|---|---|---|
| | Polysulfone (PS) Solvay's Udel P-1700 | Polycarbonate SABIC Lexan HP4 |

| **Mechanical Properties** | | |
|---|---|---|
| Tensile Strength @ Yield^{A} | 70.33 N/mm² (10,200 psi) | 61.36 N/mm² (8,900 psi) |

| **Chemical Resistance** | | |
|---|---|---|
| Sodium Hydroxide | Compatible | Not Compatible |
| Sodium Hypochlorite | Compatible | Note Compatible |
| Ethanol | Compatible | - |

| **Weldability** | | |
|---|---|---|
| Hot Plate Welding | Ok | Ok |
| Vibration Welding | Ok | Ok |

| **Material Safety** | | |
|---|---|---|
| US FDA 21CFR Compliance | Pass | Pass |
| USP Class VI | Pass | Pass |
| MEM Elution Test^{B} | Pass | Pass |
| BSE/TSE^{C} | Pass | Pass |

| **Sterilization Methods** | | |
|---|---|---|
| Autoclave Sterilization 126°C(259°F), 1 cycle, 30 minutes | 50 cycles (30 min each @ steam pressure of 1.86 bar [27 psig]) @ 132°C shows increas in tensile, slight reduction in izod [53.38 to 48.04 N](1.0 to 0.9 fl-lb/in) | ∼ 2-10 Cycles 126°C max |

| **Opacity** | | |
|---|---|---|
| Transparent or Opaque | Transparent | Transparent |

| | | |
|---|---|---|
| A ASTM Spec. D-638 B Cytotoxicity Test C Bovine Spongiform Encephalopathy/Transmissible Spongiform Encephalopathy, which is an indicator that the material does not contain products from animal products. | | |

As shown in Table 1, the polysulfone provides many properties, in particular chemical resistance as compared to polycarbonate, making it suitable for the filtration capsules provided herein.

### EXAMPLE 2

Configuration of various ribbing structures as formed from polysulfone were tested and analyzed. Predictive analysis using FEA (Finite Element Analysis) was done to show expected maximum stress and maximum deflection. Table 2 provides a summary.

**Table 2**

| | **Example 2-A** | **Example 2-B** | **Example 2-C** | **Example 2-D** |
|---|---|---|---|---|
| Rib (axial length) height @ center (inches) | ∼ 1.00" | ∼ 1.00" | ∼0.625" | 0.800" |
| Rib (axial length) shape | dome | dome | flat | dome |
| Number of support rings | 4 + rings on outer diameter | 4 | 6 | 6 |
| Spacing between support rings | equidistant | equidistant | Spaced smaller near inner diameter and grow as to outer diameter | Spaced smaller near inner diameter and grow as to outer diameter |
| Center connecting ribs? | No | Yes (8) | Yes (8) | Yes (8) |
| Max stress | 231.32 bar (3355 psi) @ 3.45 bar (50 psi) 447.6 bar (6492 psi) @ 6.89 bar (100 psi) | 251.31 bar (3645 psi @ 3.1 bar (45 psi) 693.96 bar (10065 psi @ 12.41 bar (180 psi) | 245.11 bar (3555 psi) @ 3.1 bar (45 psi) 256.28 bar (3717 psi) @ 6.21 bar (90 psi) 710.99 bar (10312 psi) @ 12.41 bar (180 psi) | 209.46 bar (3038 psi) @ 3.1 bar (45 psi) 401.76 bar (5827 psi) @ 6.21 bar (90 psi) 669.62 bar (9712 psi) @ 12.41 bar (180 psi) |
| Max deflection | 0.0889 cm (0.035 inches) @ 3.45 bar (50 psi) 0.18288 cm (0.072 inches) @ 6.89 bar (100 psi) | 0.127 cm (0.050 inches) @ 3.1 bar (45 psi) | 0.1778 cm (0.070 inches) @ 3.1 bar (45 psi) 0.3683 cm (0.145 inches) @ 6.21 bar (90 psi) 0.85344 cm (0.336 inches) @ 12.41 bar (180 psi) | 0.16002 cm (0.063 inches) @ 3.1 bar (45 psi) 0.32766 cm (0.129 inches) @ 6.21 bar (90 psi) 0.74422 cm (0.293 inches) @ 12.41 bar (180 psi) |

It can be concluded from Table 2 that various configurations of ribbing structures can be utilized to meet pressure ratings as desired.

Reference throughout this specification to "one embodiment," "certain embodiments," "one or more embodiments" or "an embodiment" means that a particular feature, structure, material, or characteristic described in connection with the embodiment is included in at least one embodiment of the invention. Thus, the appearances of the phrases such as "in one or more embodiments," "in certain embodiments," "in one embodiment" or "in an embodiment" in various places throughout this specification are not necessarily referring to the same embodiment of the invention.

It is to be understood that the above description is intended to be illustrative, and not restrictive. Many other embodiments will be apparent to those of ordinary skill in the art upon reviewing the above description. The scope of the invention should, therefore, be determined with reference to the appended claims.

## Claims

1. A filtration capsule (10) comprising:
first and second shells (12, 14) that are sealably attached to each other, wherein both shells each comprise a curved exterior surface (18a, 18b) and a substantially flat interior wall (20a, 20b) that is integral to the shell (12, 14), wherein on one or both of the curved exterior surfaces (18a, 18b) of the shells (12, 14) a ribbing structure (48a, 48b) integral to the one or both shells (12, 14) is formed, the ribbing structure (48a, 48b) comprising one or a plurality of peripheral support rings (482a) and one or a plurality of axial lengths (481a) on one or both of the shells (12, 14);
an inlet (26) and an outlet (30) that are substantially parallel to the substantially flat interior walls (20a, 20b); and
one or more filter elements (36) contained in the filtration capsule (10), each filter element (36) comprising an outer surface (38) in fluid communication with the inlet (26) and an inner surface (40) in fluid communication with the outlet (30).

2. The filtration capsule (10) of claim 1, wherein the ribbing structure (48a, 48b) is effective to impart a pressure rating such that the filtration capsule is stand alone.

3. The filtration capsule (10) of claim 1, wherein the substantially flat interior walls (20a, 20b)of the first shell (12), the second shell (14), or both independently comprise one or more protrusions (17).

4. The filtration capsule (10) of claim 1, wherein one or both of the shells (12, 14) are formed from a translucent or transparent material.

5. The filtration capsule (10) of claim 1, wherein both of the shells (12, 14) are formed from a material that comprises a tensile strength at yield of 55.158 N/mm² (8,000 psi) or greater and exhibits chemical resistance, weldability, and sterilizability.

6. The filtration capsule (10) of claim 5, wherein the material comprises polysulfone.

7. The filtration capsule (10) of claim 1, wherein the inlet (26) and the outlet (30) are both integral to the second shell (14).

8. The filtration capsule (10) of claim 1 further comprising at least two legs.

9. The filtration capsule (10) of claim 8 comprising three legs (44a, 44b) spaced approximately 120° apart on the curved exterior surface (18b) of the second shell (14).

10. The filtration capsule (10) of claim 1, wherein the first shell (12) has substantially the same capacity as the second shell (14).

11. The filtration capsule (10) of claim 1, wherein the first shell (12) has a capacity that is 1.1 to 10 times the capacity of the second shell (14).

12. The filtration capsule (10) of claim 1, wherein the filter element (36) comprises one or more media layers.

13. The filtration capsule (10) of claim 12, wherein the filter element (36) further comprises a flow inhibitor (42).

14. The filtration capsule (10) of claim 1, further comprising an o-ring seal (50) between a protrusion (17) of the second shell (14) and an inner overmold (35) of the filter element (36).

## Patentansprüche

1. Eine Filtrationskapsel (10), die aufweist:
erste und zweite Schalen (12, 14), die dichtend miteinander verbunden sind, wobei beide Schalen jeweils eine gebogene Außenfläche (18a, 18b) und eine im Wesentlichen flache Innenwand (20a, 20b) aufweisen, die in die Schale (12, 14) integriert ist, wobei an einer oder beiden der gebogenen Außenflächen (18a, 18b) der Schalen (12, 14) eine Verrippungsstruktur (48a, 48b) integriert in eine oder beide Schalen (12, 14) gebildet ist, wobei die Verrippungsstruktur (48a, 48b) einen oder eine Mehrzahl peripherer Stützringe (482a) und eine oder eine Mehrzahl axialer Längen (481a) an einer oder beiden der Schalen (12, 14) aufweist;
einen Einlass (26) und einen Auslass (30), die im Wesentlichen parallel zu den im Wesentlichen flachen Innenwänden (20a, 20b) verlaufen; und
ein oder mehrere Filterelemente (36) in der Filtrationskapsel (10), wobei jedes Filterelement (36) eine Außenfläche (38) in Fluidverbindung mit dem Einlass (26) und eine Innenfläche (40) in Fluidverbindung mit dem Auslass (30) aufweist.

2. Die Filtrationskapsel (10) nach Anspruch 1, wobei die Verrippungsstruktur (48a, 48b) wirksam ist, um einen Nenndruck auszuüben, sodass die Filtrationskapsel eigenständig ist.

3. Die Filtrationskapsel (10) nach Anspruch 1, wobei die im Wesentlichen flachen Innenwände (20a, 20b) der ersten Schale (12), der zweiten Schale (14) oder beider Schalen unabhängig einen oder mehrere Vorsprünge (17) aufweisen.

4. Die Filtrationskapsel (10) nach Anspruch 1, wobei eine oder beide der Schalen (12, 14) aus einem durchscheinenden oder durchsichtigen Material gebildet ist bzw. sind.

5. Die Filtrationskapsel (10) nach Anspruch 1, wobei die beiden Schalen (12, 14) aus einem Material gebildet sind, das eine Streckgrenze von 55,158 N/mm² (8000 psi) oder mehr aufweist und chemische Beständigkeit, Schweißbarkeit und Sterilisierbarkeit zeigt.

6. Die Filtrationskapsel (10) nach Anspruch 5, wobei das Material Polysulfon aufweist.

7. Die Filtrationskapsel (10) nach Anspruch 1, wobei der Einlass (26) und der Auslass (30) beide in die zweite Schale (14) integriert sind.

8. Die Filtrationskapsel (10) nach Anspruch 1, die ferner mindestens zwei Beine aufweist.

9. Die Filtrationskapsel (10) nach Anspruch 8, die drei Beine (44a, 44b) in einem Abstand von ca. 120° voneinander an der gebogenen Außenfläche (18b) der zweiten Schale (14) aufweist.

10. Die Filtrationskapsel (10) nach Anspruch 1, wobei die erste Schale (12) im Wesentlichen dasselbe Fassungsvermögen wie die zweite Schale (14) aufweist.

11. Die Filtrationskapsel (10) nach Anspruch 1, wobei die erste Schale (12) ein Fassungsvermögen aufweist, das das 1,1-Fache bis 10-Fache des Fassungsvermögens der zweiten Schale (14) beträgt.

12. Die Filtrationskapsel (10) nach Anspruch 1, wobei das Filterelement (36) eine oder mehrere Medienschichten aufweist.

13. Die Filtrationskapsel (10) nach Anspruch 12, wobei das Filterelement (36) ferner einen Strömungsinhibitor (42) aufweist.

14. Die Filtrationskapsel (10) nach Anspruch 1, ferner aufweisend eine O-Ringdichtung (50) zwischen einem Vorsprung (17) der zweiten Schale (14) und einem inneren Formteil (35) des Filterelements (36).

## Revendications

1. Capsule de filtration (10) comprenant :
des première et deuxième enveloppes (12, 14) qui sont fixées hermétiquement l'une à l'autre, dans laquelle les deux enveloppes comprennent chacune une surface extérieure incurvée (18a, 18b) et une paroi intérieure sensiblement plate (20a, 20b) qui est solidaire de l'enveloppe (12, 14), dans laquelle sur l'une ou les deux des surfaces extérieures incurvées (18a, 18b) des enveloppes (12, 14) une structure de nervure (48a, 48b) solidaire de l'une ou des deux enveloppes (12, 14) est formée, la structure de nervure (48a, 48b) comprenant un ou une pluralité d'anneaux de support périphériques (482a) et une ou une pluralité de longueurs axiales (481a) sur l'une ou les deux des enveloppes (12, 14) ;
une entrée (26) et une sortie (30) qui sont sensiblement parallèles aux parois intérieures sensiblement plates (20a, 20b) ; et
un ou plusieurs éléments de filtre (36) contenus dans la capsule de filtration (10), chaque élément de filtre (36) comprenant une surface externe (38) en communication fluidique avec l'entrée (26) et une surface interne (40) en communication fluidique avec la sortie (30).

2. Capsule de filtration (10) selon la revendication 1, dans laquelle la structure de nervure (48a, 48b) est efficace pour transmettre une pression nominale de telle sorte que la capsule de filtration est autonome.

3. Capsule de filtration (10) selon la revendication 1, dans laquelle les parois intérieures sensiblement plates (20a, 20b) de la première enveloppe (12), la deuxième enveloppe (14), ou les deux comprennent indépendamment une ou plusieurs parties saillantes (17).

4. Capsule de filtration (10) selon la revendication 1, dans laquelle l'une ou les deux des enveloppes (12, 14) sont formées à partir d'un matériau translucide ou transparent.

5. Capsule de filtration (10) selon la revendication 1, dans laquelle les deux enveloppes (12, 14) sont formées à partir d'un matériau qui comprend une résistance à la traction de 55,158 N/mm² (8 000 psi) ou plus et présente une résistance chimique, une aptitude à la soudure, et une aptitude à la stérilisation.

6. Capsule de filtration (10) selon la revendication 5, dans laquelle le matériau comprend de la polysulfone.

7. Capsule de filtration (10) selon la revendication 1, dans laquelle l'entrée (26) et la sortie (30) sont toutes les deux solidaires de la deuxième enveloppe (14).

8. Capsule de filtration (10) selon la revendication 1 comprenant en outre au moins deux pattes.

9. Capsule de filtration (10) selon la revendication 8 comprenant trois pattes (44a, 44b) espacées approximativement de 120° sur la surface extérieure incurvée (18b) de la deuxième enveloppe (14).

10. Capsule de filtration (10) selon la revendication 1, dans laquelle la première enveloppe (12) a sensiblement la même capacité que la deuxième enveloppe (14).

11. Capsule de filtration (10) selon la revendication 1, dans laquelle la première enveloppe (12) a une capacité qui est 1,1 à 10 fois la capacité de la deuxième enveloppe (14).

12. Capsule de filtration (10) selon la revendication 1, dans laquelle l'élément de filtre (36) comprend une ou plusieurs couches de support.

13. Capsule de filtration (10) selon la revendication 12, dans laquelle l'élément de filtre (36) comprend en outre un inhibiteur d'écoulement (42).

14. Capsule de filtration (10) selon la revendication 1, comprenant en outre un joint torique (50) entre une partie saillante (17) de la deuxième enveloppe (14) et un surmoulage interne (35) de l'élément de filtre (36).
